(19) Europäisches Patentamt
European Patent Office
Office européen des brevets

(11) **EP 3 248 338 B1**

(12) **EUROPEAN PATENT SPECIFICATION**

(45) Date of publication and mention
of the grant of the patent:
**27.11.2019  Bulletin 2019/48**

(21) Application number: **15702181.7**

(22) Date of filing: **21.01.2015**

(51) Int Cl.:
*H04L 12/24* (2006.01)  *H04L 12/715* (2013.01)
*H04L 12/46* (2006.01)  *H04L 12/725* (2013.01)
*H04L 12/717* (2013.01)  *H04L 12/721* (2013.01)

(86) International application number:
**PCT/EP2015/051170**

(87) International publication number:
**WO 2016/116152 (28.07.2016 Gazette 2016/30)**

(54) **ELASTICITY IN A VIRTUALISED NETWORK**

ELASTIZITÄT IN EINEM VIRTUALISIERTEN NETZWERK

ÉLASTICITÉ DANS UN RÉSEAU VIRTUALISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2017  Bulletin 2017/48**

(73) Proprietor: **Telefonaktiebolaget LM Ericsson (publ)**
**164 83 Stockholm (SE)**

(72) Inventors:
• **IOVANNA, Paola**
  **I-56100 Pisa (IT)**
• **UBALDI, Fabio**
  **I-56100 Pisa (IT)**
• **PEPE, Teresa**
  **I-56100 Pisa (IT)**

(74) Representative: **Brann AB**
**P.O. Box 3690**
**Drottninggatan 27**
**103 59 Stockholm (SE)**

(56) References cited:
**WO-A1-2009/118050   WO-A2-2010/099513**
**US-A1- 2008 095 176   US-A1- 2014 122 683**

## Description

### Technical Field

The present invention relates to a method, apparatuses and computer program product for providing elasticity in a virtualized network

### Background

With the advent of cloud computing and data center based services, requests for high bandwidth and dynamic end-to-end (E2E) connectivity are enormously increased. Networks may be composed by heterogeneous domains that differ in, for example, management and geographic locations, and may have vendor-specific technologies.

In this context, to efficiently manage the network and automatically provide E2E connection becomes critical. The sharing of local information, such as the complete network topology, becomes difficult, especially if networks domains are managed by different entities. An efficient abstraction of the transport layer is fundamental to simplify interworking of different administrative and technology domains and to enable E2E routing solutions.

Network virtualization is a promising trend of enabling effective managing of networks. In this context the transport network assumes a new role of providing dynamically E2E connectivity. One of the main aspects of network virtualisation is the ability to create a smart logical and abstract view of the physical network resources (like packet and optical switches, routers, etc.) that allows for hiding hardware complexity and constrains.

Physical resources still need to be allocated in such a virtualized network.

WO 2009/118050 describes constructing an end-to-end routing path across multiple packet switched domains. The method comprises generating a domains topology identifying all possible domains, the border elements and the inter-domain links.

### Summary

According to a first aspect there is provided a method for providing support for elasticity within a domain of a multi-domain network according to independent claim 1.

According to a second aspect there is provided a Virtualizer for providing support for elasticity within a domain of a multi-domain network, according to independent Claim 10.

According to a third aspect there is provided an apparatus configured to provide support for elasticity within a domain of a multi-domain network (120), according to independent Claim 12.

According to a fourth aspect there is provided a computer program product, configured when run on a computer to conduct a method according to any method claim.

### Brief description of the drawings

Aspects of the present disclosure will be described, by way of example only, with reference to the drawings, in which:

Figure 1 shows an example of a system architecture;
Figure 2a shows an example illustrating paths within a domain;
Figure 2b shows an example table providing information of the paths within a domain;
Figure 3 shows an example of a first method according to an example;
Figure 4 shows an example of a second method according to an example;
Figure 5 shows an example of a third method according to an example; and
Figure 6 shows an example of an apparatus according to an example.

### Detailed description

Aspects relate to providing elasticity in a network in which physical resources are considered as virtualized. Examples relate to intra-domain path calculation, e.g. selection of physical paths to fulfil the bandwidth requested on the basis of a virtualized topology. An elasticity is requested on the basis of the virtualized topology. Aspects relate to selection of physical paths to efficiently provide the requested service and the requested elasticity.

Elasticity relates to the ability to dynamically provide enough resources to the service. This means that if a service requires more or less network resources in time, the network is able to quickly react by adding or releasing physical resources.

In some examples, the elastic capability of the physical resources is due to an elastic reconfiguration of nodes, for example controlling (varying) one or more of symbol rate, modulation format, channel spacing and/or other parameter. In some examples, the elastic capability of a server node uses a transponder which is configured to vary line capacity. In some aspects, the elastic capability of a server node relates to a network element (e.g. an optical cross-connect) which is able to vary a bandwidth of a switching window, varying the bandwidth of the elastic optical path. In some examples, the elastic capability utilises arbitrary bandwidth channels (flexpath), or any elastic optical networking method. In some examples, the elasticity is provided by bandwidth variation of a Label Switched Path (LSP) in a Multiprotocol Label Switching (MPLS) network. In some examples, the elasticity is provided by using one or more alternate paths.

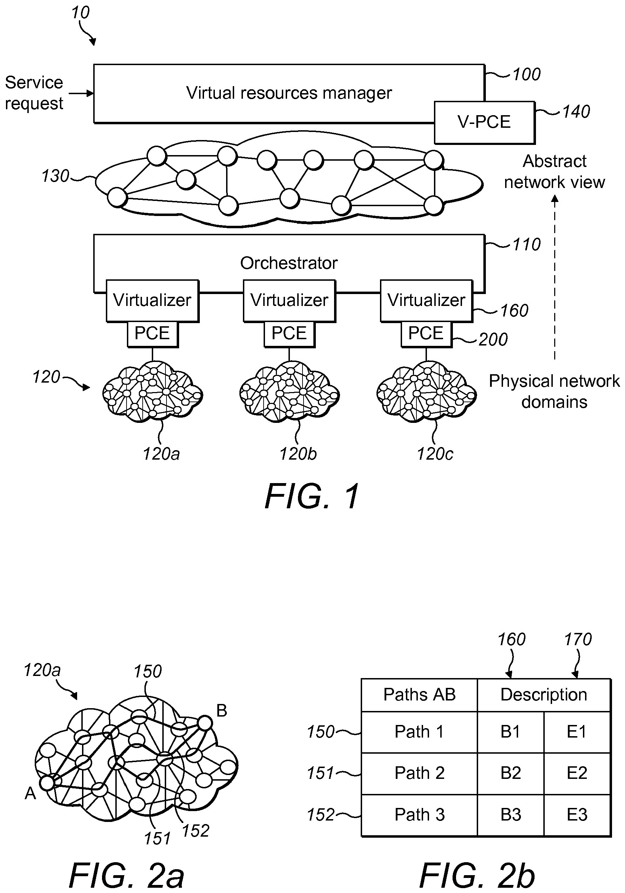

Figure 1 shows an example of an architecture 10 in which aspects are implemented. The architecture 10 comprises two main functional components: a Virtual Resources Manager 100 and an Orchestrator 110. The Virtual Resources Manager 100 is appointed to manage E2E resources. The E2E resources are the virtual resources obtained by summarising the available physical resources (e.g., link, bandwidth, elasticity capability). The Virtual Resources Manager 100 validates and authorizes resource requests and consequently manages the underlying transport network, e.g. a multi-domain network 120. Three domains of the multi-domain network 120 are shown as 120a,120b,120c. The three domains 120a,120b,120c are an example of a multi-domain network 120.

In some examples, a plurality of the domains of the network 120 are heterogeneous. The heterogeneity could be: at technology level (e.g. packet, optical, etc.), and/or at control level, (e.g. one domain controlled by SDN, another by distributed control such as GMPLS, another is managed by NMS only without control plane). In some examples, plurality of the domains have different vendors. Each domain may or may not have a PCE internal to the domain.

The Virtual Resources Manager 100 works based on a virtualized summary 130 of the physical network. The Virtual Resources Manager 100 is arranged to manage E2E resources. The Virtual Resources Manager 100 validates and authorizes service requests and consequently manages the underlying network working on the virtual topology to provide E2E connections.

A Virtual PCE 140 (Path Computation Element) that is able to select an E2E path in an efficient way working on the logical network provided to the Orchestrator 110. In one embodiment the Virtual Resources Manager 100 may include PCE 140 functionalities or the Virtual Resources Manager 100 interacts with an external PCE to compute E2E paths across the multi-domain network 120.

The Orchestrator 110 is responsible for providing, and in some example determining, an abstract view of the network for an efficient path handling in the upper-layer network, that is in the Virtual Resources Manager 100. The Virtual Resources Manager 100 performs a more efficient path handling when a virtual topology is provided. In some aspects the Orchestrator 110 harmonizes information provided by each domain 120a, 120b, 120c to provide to the virtual resources manager a unified abstract view of the physical network. The Orchestrator 110 creates the overall virtual topology.

To do this, a Virtualizer 160 collects information (including elasticity information) provided by each domain and translates it into service parameters. The Virtualizer 160 is configured to collect information about the available physical resources. In some examples, each Virtualizer 160 operates on one physical domain. In some aspects, one or more Virtualizer is configured to receive a list of paths for each edge point from each domain, or from the entire topology. In some aspects, the Virtualizer 160 carries out a computation by itself on such a list of paths.

In one embodiment the Virtualizer 160 is in communication with, or comprises, a Path Computation Element 200. Each domain has an associated PCE 200. The PCE 200 has the function of determining a path, in the form of a physical path, of an associated domain, e.g. domain 120a. The Virtualizer 160 is configured to determine physical links which are able to carry traffic according to a calculated virtual path. In some examples, a virtual link in, or across, a domain is provided to the Virtualizer 160. The Virtualizer 160 is configured to receive such a request to carry traffic on a virtual link. The Virtualizer 160 is configured to select or identify one or more physical path corresponding to that virtual link. The physical path may be identified by one or more of: nodes, label switched paths, links or segment identifiers.

The architecture shown may be considered as showing physical network domains 120 at the bottom, progressing to an abstract network view towards the top of Figure 1.

In one example, the architecture is implemented as a Software Defined Network (SDN) architecture.

In aspects of the present solution, the Virtual Resources Manager 100 is provided by the Orchestrator 110 with parameters (including one or more elasticity parameter), and in this way the Virtual Resources Manager 100 manages elasticity without knowing the specific techniques implemented in the underlying domains. This is possible because elasticity parameters refer to the virtualised network. In other words, elasticity parameters represent elasticity capability in the virtual network.

In some examples, the Orchestrator 110 receives information of an elasticity capability (i.e. an elasticity parameter) of the physical links from each network domain 120. The Virtualizer 160 communicating with the Orchestrator defines the elasticity parameters to describe the underlying network topology using technology independent, very high level language. The Virtualizer 160 has summarised physical paths according to one or more parameter (e.g., bandwidth, delay) and elasticity parameters into virtual links.

In some aspects, the parameters may be considered as a service parameter or a Quality of Service (QoS) parameter. A further parameter is an elasticity parameter. The orchestrator 110 associates each virtual link elasticity parameter inferred from the physical paths and produces a topology of the virtual network. Each physical path is associated with a service parameter and an elasticity parameter.

The elasticity features in network virtualization provides the ability to provide dynamically enough resources to the service during its lifetime in order to assure the agreed SLA. This means that if a service requires more/less network resources in the time, the network has to quickly react adding/releasing physical resources. Aspects of the invention provide for selection of physical paths according to a requested elastic parameter. The physical path selected satisfies the requested service parameter (e.g. bandwidth) and a requested elasticity parameter (e.g. additional bandwidth). The selection identifies an optimal physical path to provide the requested parameters of the virtual link.

Aspects provide a method to improve an elastic E2E resource allocation. The method may be considered to organize and summarize the physical resources to simplify the virtualization topology of E2E multi-domain transport network. A selection is made of intra-domain paths which allows a better usage of the physical resources for an efficient E2E path handling. Aspects include assigning a quantitative value to the elasticity parameters to be exposed to the virtualized topology.

In a multi-domain network 120, as shown in Figure 1, it is a challenge to provide E2E connectivity with particular QoS requirements.

In E2E path calculation, there is not a detailed knowledge of the physical domains. The path identification is performed on the basis of the virtual topology. Providing an efficient abstract view of the network is a key challenge, as is allocating actual physical resources according to the abstract view.

Figure 2a shows an example domain 120a, having end nodes A,B, as border nodes. For a virtual path between A and B, a plurality of physical paths may be used to carry traffic. Three example physical paths 150,151,152 are shown. The physical path selected is not known to the virtualized network. In examples, the physical path within a domain is selected according to a service parameter and an elasticity parameter requested at the virtual network level (i.e. virtual link).

Each domain 120a,120b,120c, for each couple of end nodes, may provide a set of available paths that provide intra-domain connectivity to the virtualizer 160. Each domain has topologic and routing information. The domain may provide this information in any suitable manner.

In some examples, each path is described in terms of QoS (service) parameters, e.g. bandwidth. For the sake of simplicity, bandwidth is described as the constraint as an example. Embodiments are not limited to bandwidth, and other parameters may be used instead or in addition, for example, parameters relating to delay, resiliency or jitter.

In some examples, each physical path 151,152,153 is described using two or more parameters, for example, a service parameter and an elasticity parameter. The service parameter and elasticity parameter are associated with a physical path. The elasticity parameter indicates an amount of improvement which can be provided to the service parameter using elasticity. For the example, of bandwidth, each physical path (i) may be described using the two parameters:

  1) B: bandwidth associated to the physical path (service parameter),

  2) E: maximum bandwidth extension achievable (elasticity parameter).

The specific value assumed by the elasticity parameter depends on the particular elasticity techniques implemented in the domain. For example, in a MPLS domain the elasticity parameter can be set to the difference between the available link bandwidth and the bandwidth allocated to the given LSP. In this way, it is possible to change, e.g. by using RSVP, the bandwidth associated to the LSP until the maximum link capacity is reached.

Alternatively or in addition, elasticity may be provided by moving the traffic to another path with more bandwidth availability. In this case, the bandwidth extension is the difference between the "new" path available bandwidth and the previously allocated bandwidth (on the "original" path). This parameter is exposed to the virtual network. Given the path characterization, the Virtualizer sorts the paths based on bandwidth constraints and organizes them in a database (one for each couple of end nodes).

Figure 2b shows example entries in a database. The physical paths corresponding to a virtual link A-B are identified with a path identifier. Associated with each physical path is a value of a service parameter 160 and a value of an elasticity parameter 170. The orchestrator is configured to summarize the information inserted in the databases providing an abstract description of the physical paths. In more detail, a virtual link is associated to each database. As a result, a virtual link A-B corresponds to one or more physical paths connecting a couple of border nodes in a specific domain.

The virtual link A-B, exposed to the Virtual Resources Manager, summarizes the resource availability between the two nodes and is described in terms of the service parameter (e.g. available bandwidth) and the elasticity parameter.

In some examples, two virtualization parameters are defined. One virtualization parameter may be a virtual service parameter, e.g. virtual Bandwidth (vB). In some examples, the virtual service parameter is defined as the maximum (i.e. best) service parameter in a basket of physical links corresponding to the virtual link. For example, the virtual bandwidth is defined as the $vB = \max_i B_i$, which is the maximum bandwidth available in the basket of paths i for a virtual link.

A further one or more parameter indicates the Virtual Elasticity (vE). The virtual Bandwidth (vB) and Virtual Elasticity (vE) may alternatively be considered as examples of the service parameter and elasticity parameter of the virtual link. In some examples, these parameters are referred to as the virtual service parameter and virtual elasticity parameter.

In some examples, the elasticity of the virtual link is indicated by one or both of a first elasticity parameter (*vE1*) and a second elasticity parameter (*vE2*).

In more detail, first elasticity parameter represents the elasticity that the network may always provide without requiring traffic to be moved to another path, which may cause traffic interruption.

The first elasticity parameter of the virtual link may be defined as $vE1 = \min_i(E_i)$. The first elasticity parameter of the virtual link takes the value of a minimum value of elasticity of a physical path. Exposing this value provides a guarantee of the provisioning of such elasticity.

The second elasticity parameter of the virtual link is the maximum elasticity the network is able to provide. Thus, the second elasticity parameter of the virtual link indicates the total elasticity, which may include moving traffic to another path and/or require disruption to traffic. The other path may be an alternative path or an additional path.

The second elasticity parameter of the virtual link of the virtual link may be defined as:

$$vE2 = \max_i(B_i + E_i) - vB$$

The second virtual elasticity parameter corresponds to a difference between the maximum total service parameter (e.g. bandwidth), including elasticity, for the physical paths i and the bandwidth of the virtual link (vB) without elasticity. The second elasticity parameter takes the value of the physical path with the maximum value of the elasticity that can be provided, as defined above. The parameter *vB* represents a value of bandwidth that is exposed in the virtualized network. In some aspects, the parameter *vB* is the bandwidth of the path with the maximum bandwidth among the list of physical path comprising the virtual path.

The exposure of values of both the first and second virtual elasticity parameter provides compatibility with a solution where elasticity with or without traffic interruption is provided in the virtual network.

These two parameters are technology independent. For example, these parameters are applicable to a packet switched network and an optically switched network. The parameters are independent of the specific elasticity technique adopted from each domain.

In some examples, if a service wishes to use the network to transport a particular kind of traffic, the service informs the network about what kind of traffic is to be transported, and the performance requirements of that traffic. This information may be presented to the network in the form of a traffic contract, e.g. Service Level Agreement (SLA).

In some examples, the service request may include a guaranteed parameter and a peak parameter, indicating a minimum level required and a maximum level. In terms of bandwidth, the service request may be described as guaranteed bandwidth and a peak bandwidth.

The guaranteed bandwidth is the bandwidth for which specific QoS constraints are required, peak bandwidth is the maximum bandwidth the service may require. While the guaranteed bandwidth is always provided, in some examples, the peak bandwidth is allowed only if elasticity may be provided.

According to the proposed method, when a new service request arrives, the service request attributes are mapped as virtualization parameters. For example, a requested virtual service parameter is equal to the guaranteed parameter. A requested virtual elasticity parameter is equal to the difference between the peak parameter and the guaranteed parameter. For the example of bandwidth:

$$\text{Requested virtual bandwidth } (B_V^r) = \text{Guaranteed bandwidth}$$

$$\text{Requested elasticity bandwidth } (E_V^r) = \text{Peak bandwidth} - \text{Guaranteed bandwidth}$$

The Virtual Resources Manager 100, working on the virtual topology, decides if the request may be accepted or not (i.e., verify that there are sufficient resources to satisfy the request). The requested virtual service parameter and requested virtual elasticity parameter may also be referred to as the requested service parameter and requested elasticity parameter. In some aspects, the requested service parameter and requested elasticity parameter are based on a virtualized view (virtual link) of the network.

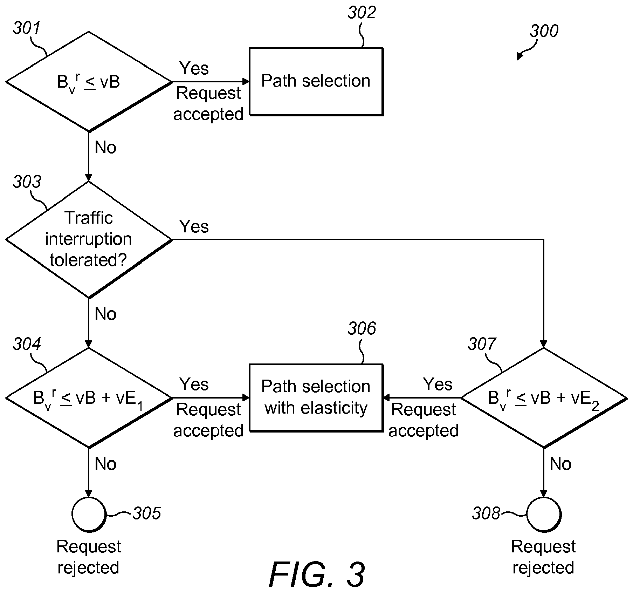

Figure 3 shows example steps of a method 300 to determine whether to accept a request. If a request is accepted, a path selection procedure to select the needed resources in the physical domain is then performed. In some examples, this method is implemented in the Virtual Resources Manager 100.

At a virtual layer, the virtual path is computed using a classical PCE algorithm (e.g. in the V-PCE) that works on the virtual topology. Given that, for each virtual link a physical path has to be selected in the database.

In 301, a determination is made of whether the requested service parameter (e.g. requested virtual bandwidth) is equal to or less than the (virtual) service parameter of a virtual link in a domain. If yes (e.g. the requested bandwidth is equal to or less than the available virtual bandwidth), then the method proceeds to the physical path selection in 302.

If the determination of 301 is no (e.g. the requested bandwidth is equal to or more than the available virtual bandwidth), the method proceeds to a further determination in 303.

In 303, the method determines if the service can tolerate temporary interruption. If the service can tolerate interruption (yes), the method proceeds to a further determination in 307. If the determination in 303 is that the service does not accept a temporary interruption (no), the method proceeds in 304.

In 304, a determination is made of whether the requested service parameter (e.g. requested bandwidth) is equal to or less than the sum of the service parameter and elasticity parameter of the virtual link assuring that the service will not be affected by traffic interruption. For the example of bandwidth, a determination is made of whether the requested bandwidth is equal to or less than the available bandwidth $vB$ and elasticity $vE1$ bandwidth of a virtual path.

In 307, a determination is made of whether the requested virtual service parameter (e.g. requested virtual bandwidth) is equal to or less than the sum of the service parameter and elasticity parameter of the virtual link without assuring that the service will not be affected by traffic interruption. For the example of bandwidth, a determination is made of whether the requested bandwidth is equal to or less than the available bandwidth $vB$ and elasticity $vE2$ bandwidth of a virtual path.

If the determination in 304 or 307 is yes, the requested is accepted. The method proceeds to physical path selection, including elasticity, in 306.

If the determination in in 304 or 307 is no, the request is not accepted. In this case, it is not possible for the domain to handle the service request, even using elasticity. The request is rejected at 305 or 308, and this process ends.

The method 300 provides for determining the acceptance of a request. In this case the principle is to verify initially whether there is available bandwidth in the virtual topology (301). In case it is not available, the principle is that the requested bandwidth is compared with the possible bandwidth (in 304 or 307) to determine (again in the virtual topology) links that can accept the request by increasing the bandwidth thanks to the elasticity parameters, respectively assuring or not assuring traffic interruption. Thus, in order to accommodate in the network the request for the first time only bandwidth is required. A path with the suitable bandwidth value available is then selected. In case it is not possible, the aspects find a path that has the bandwidth required even if it is the sum of bandwidth and elasticity.

After this determination, there is the phase of selection of physical links (302 or 306) corresponding to the logical link. As described in more detail in this description, the virtualizer 160 selects the path with minimum bandwidth that can satisfy the request. In case the condition is not met, the Virtualizer 160 selects the physical path with the minimum value of bandwidth for which $B_i+E_i$ satisfies the request. The method aims to select the minimum value of bandwidth. This is in order to maximize resource optimization. In some aspects this provides for minimizing the times that the bandwidth value on the virtual topology representation is changed.

In the method 300, the peak parameter or requested virtual elasticity parameter (e.g. Requested elasticity bandwidth) is not considered. Thus, at this point an elasticity request is not taken into account. The request is accepted if at least the guaranteed bandwidth is available. The elasticity request is taken into account in the physical path selection.

Following acceptance of a request, a selection of the physical path is made, taking into account both service (e.g. bandwidth) requirements and elasticity features. An optimization provides the required resources, while providing a margin for any eventual service parameter (e.g. bandwidth) increase request. In some examples, the PCE 200 uses a criterion to select the physical path.

The physical path is selected taking into account both the service parameter (e.g. bandwidth) requirements and the elasticity features, i.e. elasticity parameter. This path selection provides for the guaranteed bandwidth, e.g. according to the SLA, but also to satisfy a larger bandwidth request (up to the peak bandwidth) if there are available resources. The described method provides a balance between the amount of physical resource allocated in terms of the service parameter (e.g. allocated bandwidth) and the elasticity. Examples of the method allocate a minimum amount of physical resources to provide the requested path, such that the method does not waste resources. At the same time the method provides an opportune margin for eventual bandwidth increase request.

Aspects of the method select the physical path with the minimum value of the service parameter (e.g. bandwidth) that satisfy the requested guaranteed parameter (e.g. requested guaranteed bandwidth). At the same time, the selected physical resource is determined to meet also a larger service parameter request (e.g. bandwidth request) using elasticity.

Each physical path has one or more parameters to describe the elasticity. The Virtualizer summarizes a list of physical paths in a virtual link and assigns a suitable parameter for bandwidth and elasticity.

Aspects provide for selection of a physical path with the minimum service parameter, for which the sum of the service parameter and the elasticity parameter is equal to or larger than the maximum resources that the service can require. In some aspects, whether the service parameter of the physical path is sufficient for the requested service parameter is not separately considered, i.e. only the sum (or combination) of the service parameter and the elasticity parameter is compared with the requested sum (or combination) of the requested service parameter and the elasticity parameter. For example, this may apply when there are no physical paths which have a service parameter which satisfies the requested service parameter without using elasticity. In some examples, a physical link may be selected even though its service parameter does not meet the requested service parameter, even if physical paths are available which do satisfy the requested service parameter.

In another example, if the virtual link is associated with one or more physical path which has a service parameter which satisfies the requested service parameter, then such a physical path is selected. In this case, the physical path selected may still have the minimum service parameter of the paths which is greater than the requested service parameter, and for which the sum (or combination) of the service parameter and the elasticity parameter is sufficient to provide the requested sum (or combination) of the requested service parameter and the elasticity parameter.

In some examples, the path is selected by comparing parameters of different paths or by comparing possible parameters of a particular path, for which a different value of the parameter (e.g. bandwidth) may be selected.

The sum of the service parameter and the elasticity parameter may be considered as the maximum service parameter achievable on this path.

An example provides that the physical path selected is the path having a minimum value of the service parameter, for which the paths for which a combination of the service parameter and elasticity parameter of the physical path satisfies the combination of the requested service parameter and requested elasticity parameter.

The combination of the (requested) service parameter and (requested) elasticity parameter may be the sum of the (requested) service parameter and (requested) elasticity parameter, e.g. where the elasticity is additive to the service parameter, e.g. for bandwidth. For other parameters, the better (which may highest or lowest) of the (requested) service parameter and (requested) elasticity parameter may indicate the combination of the (requested) service parameter and (requested) elasticity parameter. The parameters of the physical path may satisfy the requested parameters if the physical path has values of the parameters which are equal to or better than the requested values of parameters, such that traffic can be carried as requested. In some examples, satisfies means that the combined values of the service and elasticity parameters of the physical path are equal to or higher than the combined requested values of the service and elasticity parameters, e.g. for bandwidth. For other parameters, the condition may be satisfied if the physical path has a lower value.

For the example of bandwidth, aspects provide for selection of a physical path with the minimum bandwidth (B) for which the bandwidth plus elasticity bandwidth (B+E) (the maximum bandwidth achievable on this path) is equal or larger than the maximum bandwidth that the service can require. In some examples, the path is selected by comparing different bandwidth paths or a path with a variable bandwidth, for which a different bandwidth can be selected. For example, if the physical path belongs to a MPLS domain with elasticity, an example modifies the amount of bandwidth of a LSP to meet the request.

For the example of bandwidth, the criterion may be considered as:

$$\min_i B_i \mid (B_i + E_i) \geq (B_v^r + E_v^r)$$

In other examples, a different criterion is used to determine which physical resources are allocated which meet a requested service parameter and elasticity parameter based on a virtual link.

In some aspects, the physical path may be selected by identifying a set of physical paths for which the combination of the service parameter and elasticity parameter satisfies the requested service parameter and elasticity parameter. The requested service parameter and elasticity parameter may apply to, and be accepted on, the basis of a virtual link to which the physical paths correspond. From the identified set of physical paths, a physical path having the minimum (i.e. least good) service parameter is selected to carry the traffic.

Aspects provide for physical path selection which minimizes the impact on the virtual link representation of the physical paths. In particular, the path selection may reduce the number of times the parameters of the virtual link change. When a physical link is selected, this may impact the correspondent virtual link because there may no longer be a physical link that can satisfy (provide) the virtual link with the same parameters. In some examples, the maximum service parameter (e.g. bandwidth) of the physical links is exposed to the virtual topology. There is at least one physical link that can satisfy the request. When the virtual link is selected on the virtual topology, a correspondent physical link must be selected among the possible physical paths. The above method selects the physical link with the minimum service parameter (e.g. bandwidth) that can satisfy the request. This means that the physical path (e.g. link) with maximum bandwidth is not impacted. The virtual link representation may be based on the physical path with the maximum service parameter, and so is not impacted by the selection of a smaller (e.g. minimum) service parameter path.

If there is not a physical path which satisfies this criterion, examples of the method selects a path for which the sum of the service parameter and elasticity parameter, e.g. $(B_i + E_i)$ is closest to the sum of the requested virtual service parameter and the requested virtual elasticity parameter, e.g. $\left( B_v^r + E_v^r \right)$.

When the physical path is selected, and the traffic request increases, a request to modify the SLA may be made to the Virtual Resources Manager 100. The Virtual Resources Manager 100 decides to accept that if the requested service parameter is equal to or less than the total available resources, i.e. service parameter plus elasticity parameter (i.e. requested $B_i \leq B_i + E_i$).

If the service cannot support interruption, a determination is made of whether the same path which already transmits the request is able to also handle the increased request using elasticity. Thus, the request is accepted if the same path has the required elastic capability. For the example of bandwidth, a request is accepted if the requested $B_{req} \leq B_i + E_i$, where i indicates the path where the request is already transmitted.

If the service can support interruption (i.e. a different path is allowed to be used), a further determination may be carried out. In some examples, in a first step as described above, determination is made of whether a requested service parameter is met using the elasticity of the path, e.g. a requested bandwidth $B_{req} \leq B_i + E_i$. If this criteria is not met, the method determines if another path j is able to meet the request. For example, $B_{req} \leq B_j + E_j$. In the case that such a path exists , the traffic is re-route on such a new path.

An advantage of this approach is the provision of a better resource (e.g. bandwidth) allocation, avoiding waste of bandwidth. Indeed, the bandwidth is allocated only when required. The particular criterion used to compute such parameters provides for keeping the virtualization of the resources stable, guaranteeing that the exposed elasticity is always available.

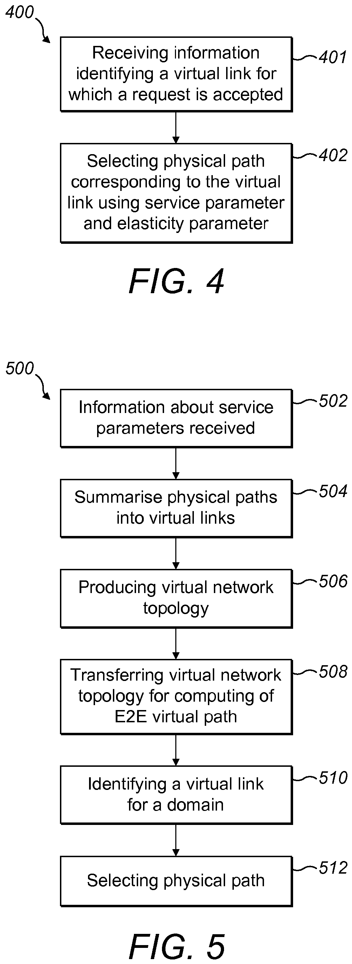

Figure 4 shows an example method 400. The method 400 may be implemented in the Virtualizer 160. The method 400 provides support for elasticity within a domain of a multi-domain network. In 401, the method receives information identifying a virtual link for which a request is accepted.

The virtual links forms part of an end-to-end path across the multi-domain network. In some examples, the information of the requested virtual link comprises a service parameter and an elasticity parameter. After the acceptance of the request from the Virtual Resources Manager 100 and the computation of the virtual path on the virtual topology; the Virtualizer 160 is arranged to select the physical path corresponding to the virtual link in order to meet the request with related parameters.

In 402, the method comprises selecting a physical path corresponding to the virtual link on which to send traffic. The physical path is selected based on the requested parameters and the parameters of the physical path, e.g. a service parameter and the elasticity parameter of the physical path. In some aspects, the physical path selected has a minimum value of the service parameter which meets the requested service parameter (optionally in combination with the requested elasticity parameter).

In some aspects, information identifying the selected physical path is output to the associated domain. The domain is able to use the configure nodes or links to carry traffic on the selected physical path.

Examples of the method providing organization of the resources of each single domain, providing a quantitative value for the virtualized resource parameters. The method optimizes resource utilization summarizing and selecting the physical resources in a suitable way. Examples provide a new method for a smart selection of intra-domain paths that allows transport resource optimization, while providing a stable view of the virtualized topology.

Figure 5 shows an embodiment of a method for providing support for elasticity in network virtualisation of a heterogeneous, multi-domain network. The method may be implemented in one or more of the Orchestrator, Virtualizer and PCE 200. The method comprises receiving, 502, from network domains information about an elasticity capability of physical paths in said network domains. The way the domains provide such information is out of scope of this document, but depending on the embodiment this information may be sent periodically or on demand. In one embodiment it is possible to have a local entity that collects connectivity information provided by each domain and translates this information into a common set of parameters so as to provide a homogenous representation of the underlying domain. In a preferred embodiment the information about elasticity capability of physical paths is received as part of information about service parameters.

In 504, the method comprises summarising physical paths into virtual links. This may be carried out in the Virtualizer. A physical link may be considered as a direct connection between two neighbouring nodes, and a physical path is a sequence of one or more physical links connecting two nodes. A virtual link corresponds to one or more physical paths (sets of physical links and nodes) connecting two edge nodes in one of the underlying network domains as shown in Figure 1.

The elasticity parameters that represent the elasticity capabilities of the underlying physical network are associated with each virtual link. In network virtualisation, and especially in a multi-domain scenario, a virtual path is an end-to-end path composed by more than one virtual link (one virtual link for a network domain). In the step 504 of summarising physical paths into virtual links, one virtual link is constructed for each couple of end nodes of each network domain.

In 506, a topology of a virtual network (virtual topology) overlaying the multi-domain network may be generated, e.g. by the Orchestrator. The virtual network includes service and elasticity parameters associated with the virtual links. The service and elasticity parameters are inferred from the physical paths. Based on the specific elasticity techniques implemented in the physical domain (e.g., Bandwidth variation of a Label Switched Path (LSP) via Resource Reservation Protocol (RSVP) in Multiprotocol Label Switching (MPLS) network or Elastic Optical Network techniques), each domain may provide information about the maximum bandwidth increment on a physical path.

In 508, the method comprises transferring the topology of the virtual network to the Virtual Resources Manager 100 for computing an end-to-end (E2E) virtual path across the virtual network. The virtual path is computed in response to a service request and is based on a Service Level Agreement (SLA) associated with the service request and elasticity parameters of the virtual links. A request may be accepted, and a virtual path computed on the virtual topology.

In 510, the virtual link for a domain is identified. The virtual link may be identified in information provided by the Virtual Resources Manager 100, or may be identified by the Orchestrator or Virtualizer from information provided by the Virtual Resources Manager 100.

In 512, the method comprises selecting a physical path. The physical path is selected by the Virtualizer 160. The physical path is selected to satisfy the requirements of the virtual path or virtual link selected, based on the service parameter and elasticity parameter of the physical path. In some examples, the selection of the physical path is optimized to use the least amount of physical resources to provide the virtual link. For example, the physical path selected is the path with a minimum bandwidth of the physical paths which have a total possible bandwidth (including elasticity) which is sufficient for the total requested bandwidth (including elasticity) of the virtual link.

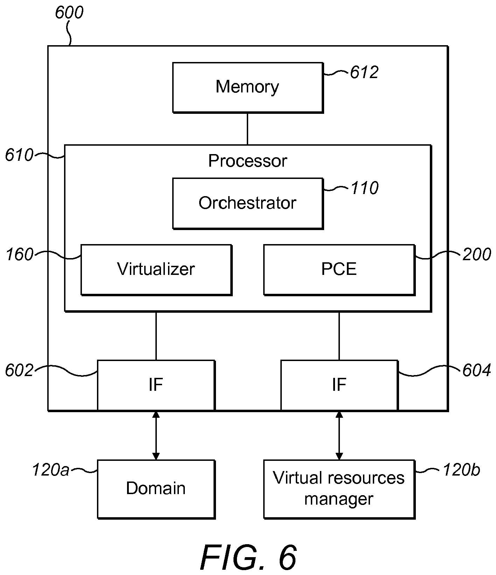

Figure 6 shows an example apparatus 600, including a functional module of one or more of the Orchestrator 110, Virtualizer 160 and PCE 200.

The apparatus 600 is configured to provide support for elasticity in network virtualisation of a heterogeneous, multi-domain network.

The apparatus 600 comprises a first interface 602 for receiving from network domains information about physical paths and the elasticity capability of physical paths in a said network domain 120a. The first interface 602 is also configured to transmit information on selected physical paths to the elements of the domain 120a.

The apparatus 600 further comprises a second interface 604 for communication with the Virtual Resources Manager 100. The first and/or second interfaces 604 may be physical interfaces or virtual interfaces.

The apparatus 600 comprises a Virtualizer 160 configured to calculate physical paths. In some examples, the calculated physical paths are output from the apparatus 600 to the domain, for example, using interface 602.

The apparatus 600 comprises a virtualizer 160 for summarising physical paths in a said network domain into virtual links. In some examples, a separate instance of the Virtualizer is provided for each domain. Moreover, when a request is accepted, it selects one of the physical paths associated with the virtual link.

The apparatus 600 comprises an orchestrator configured to harmonize information provided by each domain to provide to the virtual resources manager a unified abstract view of the physical network. The orchestrator creates the virtual topology. The orchestrator communicates with the virtual resources manager on the second interface 604.

In some examples, one or more or of the PCE 200, virtualizer 140 and Orchestrator operate in a processing arrangment 610 comprising one or more processors, operatively coupled to a memory 612. The memory is shown separately to the processor 610; the memory may alternatively be considered part of any of the PCE 200, virtualizer 140 and orchestrator.

Examples keep the virtualization of the resources relatively stable, guaranteeing that the elasticity virtualized is always available. The provided abstract view of the network allows an efficient resource allocation also in a multi-domain context with heterogeneous technologies (e.g., packet and optical), control, and vendors. Aspects provide a mechanism for an automatic E2E service provisioning which is unaware of the heterogeneity of the transport domains. This provides a mechanism for automatic provisioning of E2E connections crossing multi-domain networks, and allows an elastic E2E resource allocation in multi-domain scenarios. In some aspects, the method and apparatus organize and summarize the physical resources in a manner that is efficient in terms of resource optimization and maximization of the traffic support. Examples provide a smart selection of intra-domain paths that allows transport resource optimization. A stable view of the virtualized topology is provided. Examples allow exploiting the elasticity features in each domain, and also in the case a domain interworks with domain that does not support elasticity.

**Claims**

1. A method (400) for providing support for elasticity within a domain of a multi-domain network (120), the method (400) comprising:

   receiving (401) information for a requested virtual link forming part of an end-to-end path across the multi-domain network (120), wherein the information of the requested virtual link comprises a requested service parameter and a requested elasticity parameter; and
   selecting (402) a physical path (150) corresponding to the requested virtual link on which to send traffic, wherein the physical path (150) is selected based on a service parameter and an elasticity parameter of the physical path (150),
   wherein the service parameters and the elasticity parameters are bandwidth and additional bandwidth respectively, and
   wherein the elasticity relates to an ability to dynamically provide required resources to a service in the multi-domain network (120).

2. The method (400) as claimed in claim 1, wherein the physical path (150) selected is a path having a minimum value of the service parameter of the physical path (150) for which a combination of the service parameter and the elasticity parameter of the physical path (150) satisfies a combination of the requested service parameter and the requested elasticity parameter.

3. The method (400) as claimed in any one of the preceding claims, wherein the physical path (150) selected is a path having a minimum bandwidth for which a sum of bandwidths of the service parameter and the elasticity parameter of the physical path (150) satisfies a sum of requested bandwidths of the requested service parameter and the requested elasticity parameter.

4. The method (400) as claimed in any one of the preceding claims, wherein the requested service parameter and the requested elasticity parameter are parameters of a virtual link accepted as part of an end-to-end path.

5. The method (400) as claimed in any one of the preceding claims, wherein the requested elasticity parameter is a first elasticity parameter indicating an elasticity which does not require moving the traffic to another path and/or the requested elasticity parameter is a second elasticity parameter indicating a total elasticity.

6. The method (400) as claimed in any one of the preceding claims, further comprising determining (301) if a request for a virtual link comprising the requested service parameter satisfies a service parameter of the virtual link in a domain (120a), or determining (303) if the request for the virtual link comprising the requested service parameter satisfies a combination of the service parameter and an elasticity parameter of the virtual link in the domain (120a).

7. The method (400) as claimed in any one of the preceding claims, further comprising determining acceptance (300) of a request for a virtual link without a determination of whether a requested elasticity defined by the requested elasticity parameter is satisfied by the virtual link.

8. The method (400) as claimed in any one of the preceding claims, further comprising:

   receiving (502) from network domains of the multi-domain network (120), information of the service parameter and the elasticity parameter of physical paths in said network domains;
   summarising (504) the physical paths in said network domains into virtual links, such that each virtual link has an associated service parameter and an associated elasticity parameter; and
   transmitting (508) the information received from said network domains to a Path Computation Element (200) for calculation of an end-to-end path across the multi-domain network (120).

9. The method (400) as claimed in any one of the preceding claims, wherein the service parameter of the physical path (150) selected satisfies the requested service parameter.

10. A Virtualizer (160) for providing support for elasticity within a domain of a multi-domain network (120), the Virtualizer (160) being configured to:

   receive information for a requested virtual link forming part of an end-to-end path across the multi-domain network (120), wherein the information of the requested virtual link comprises a requested service parameter and a requested elasticity parameter; and

select a physical path (150) corresponding to the requested virtual link on which to send traffic, wherein the Virtualizer (160) is configured to select the physical path (150) based on a service parameter and an elasticity parameter of the physical path (150),

wherein the service parameters and the elasticity parameters are bandwidth and additional bandwidth respectively, and

wherein the elasticity relates to an ability to dynamically provide required resources to a service in the multi-domain network (120).

11. The Virtualizer (160) as claimed in claim 10, wherein the Virtualizer (160) is configured to select the physical path (150) having a minimum value of the service parameter of the physical path (150) for which a combination of the service parameter and the elasticity parameter of the physical path (150) satisfies a combination of the requested service parameter and the requested elasticity parameter.

12. An apparatus (600) configured to provide support for elasticity within a domain of a multi-domain network (120), the apparatus (600) comprising an Orchestrator (110), a Virtualizer (160), and a Path Computation Element (200), the apparatus (600) further comprising:

an interface (604) configured to receive information for a requested virtual link forming part of an end-to-end path across the multi-domain network (120), wherein the information of the requested virtual link comprises a requested service parameter and a requested elasticity parameter; and

the Virtualizer (160) configured to select a physical path (150) corresponding to the requested virtual link on which to send traffic, wherein the physical path (150) is selected based on a service parameter and an elasticity parameter of the physical path (150),

wherein the service parameters and the elasticity parameters are bandwidth and additional bandwidth, and wherein the elasticity relates to an ability to dynamically provide required resources to a service in the multi-domain network (120).

13. The apparatus (600) as claimed in claim 12, further configured to receive from network domains of the multi-domain network (120), information of the service parameter and the elasticity parameter of physical paths in said network domains of the multi-domain network (120), and summarise the physical paths in said network domains into virtual links, such that each virtual link has an associated service parameter and an associated elasticity parameter, wherein the apparatus (600) is further configured to transmit the information received from said network domains to the Path Computation Element (200) for calculation of an end-to-end path across the multi-domain network (120).

14. A computer program product configured, when run on a computer, to conduct a method (400) according to all the steps of any one of claims 1 to 9.

**Patentansprüche**

1. Verfahren (400) zum Bereitstellen einer Elastizitätsunterstützung in einer Domäne eines Netzwerks (120) mit mehreren Domänen, wobei das Verfahren (400) Folgendes umfasst:

Empfangen (401) von Informationen für eine angeforderte Verknüpfung, die einen Teil eines End-to-End-Pfades über das Netzwerk (120) mit mehreren Domänen hinweg bildet, wobei die Informationen der angeforderten virtuellen Verknüpfung einen angeforderten Dienstparameter und einen angeforderten Elastizitätsparameter umfassen; und

Auswählen (402) eines physischen Pfades (150), der mit der angeforderten virtuellen Verknüpfung übereinstimmt und auf dem Verkehr gesendet werden soll, wobei der physische Pfad (150) auf Grundlage eines Dienstparameters und eines Elastizitätsparameters des physischen Pfades (150) ausgewählt ist, wobei die Dienstparameter und die Elastizitätsparameter jeweils eine Bandbreite und eine zusätzliche Bandbreite sind und

wobei sich die Elastizität auf eine Fähigkeit bezieht, erforderliche Ressourcen dynamisch an einem Dienst in dem Netzwerk (120) mit mehreren Domänen bereitzustellen.

2. Verfahren (400) nach Anspruch 1, wobei der ausgewählte physische Pfad (150) ein Pfad ist, der einen Mindestwert des Dienstparameters des physischen Pfades (150) aufweist, für den eine Kombination aus dem Dienstparameter und dem Elastizitätsparameter des physischen Pfades (150) einer Kombination aus dem angeforderten Dienstparameter und dem angeforderten Elastizitätsparameter entspricht.

3. Verfahren (400) nach einem der vorangehenden Ansprüche, wobei der ausgewählte physische Pfad (150) ein Pfad ist, der eine Mindestbandbreite aufweist, für die eine Summe aus Bandbreiten des Dienstparameters und des Elastizitätsparameters des physischen Pfades (150) einer Summe aus angeforderten Bandbreiten des angeforderten Dienstparameters und des angeforderten Elastizitätsparameters entspricht.

4. Verfahren (400) nach einem der vorangehenden Ansprüche, wobei der angeforderte Dienstparameter und der angeforderte Elastizitätsparameter Parameter einer virtuellen Verknüpfung sind, die als Teil eines End-to-End-Pfades angenommen wird.

5. Verfahren (400) nach einem der vorangehenden Ansprüche, wobei der angeforderte Elastizitätsparameter ein erster Elastizitätsparameter ist, der eine Elastizität angibt, die kein Bewegen des Verkehrs zu einem anderen Pfad erforderlich macht, und/oder der angeforderte Elastizitätsparameter ein zweiter Elastizitätsparameter ist, der eine Gesamtelastizität angibt.

6. Verfahren (400) nach einem der vorangehenden Ansprüche, ferner umfassend Bestimmen (301), ob eine Anforderung einer virtuellen Verknüpfung, die den angeforderten Dienstparameter umfasst, einem Dienstparameter der virtuellen Verknüpfung in einer Domäne (120a) entspricht, oder Bestimmen (303), ob die Anforderung der virtuellen Verknüpfung, die den angeforderten Dienstparameter umfasst, einer Kombiation aus dem Dienstparameter und einem Elastizitätsparameter der virtuellen Verknüpfung in der Domäne (120a) entspricht.

7. Verfahren (400) nach einem der vorangehenden Ansprüche, ferner umfassend Bestimmen einer Annahme (300) einer Anforderung einer virtuellen Verknüpfung ohne eine Bestimmung davon, ob einer angeforderten Elastizität, die durch den angeforderten Elastizitätsparameter definiert ist, durch die virtuelle Verknüpfung entsprochen wird.

8. Verfahren (400) nach einem der vorangehenden Ansprüche, ferner umfassend:

Empfangen (502) von Informationen des Dienstparameters und des Elastizitätsparameters von physischen Pfaden in Netzwerkdomänen des Netzwerks (120) mit mehreren Domänen von den Netzwerkdomänen;
Zusammenfassen (504) der physischen Pfade in den Netzwerkdomänen in virtuelle Verknüpfungen, sodass jede virtuelle Verknüpfung einen zugeordneten Dienstparameter und einen zugeordneten Elastizitätsparameter aufweist; und
Übertragen (508) der von den Netzwerkdomänen empfangenen Informationen an ein Pfadberechnungselement (200) zur Berechnung eines End-to-End-Pfades über das Netzwerk (120) mit mehreren Domänen hinweg.

9. Verfahren (400) nach einem der vorangehenden Ansprüche, wobei der ausgewählte Dienstparameter des physischen Pfades (150) dem angeforderten Dienstparameter entspricht.

10. Virtualisierer (160) zum Bereitstellen einer Elastizitätsunterstützung in einer Domäne eines Netzwerkes (120) mit mehreren Domänen, wobei der Virtualisierer (160) zu Folgendem konfiguriert ist:

Empfangen von Informationen für eine angeforderte Verknüpfung, die einen Teil eines End-to-End-Pfades über das Netzwerk (120) mit mehreren Domänen hinweg bildet, wobei die Informationen der angeforderten virtuellen Verknüpfung einen angeforderten Dienstparameter und einen angeforderten Elastizitätsparameter umfassen; und
Auswählen eines physischen Pfades (150), der mit der angeforderten virtuellen Verknüpfung übereinstimmt und auf dem Verkehr gesendet werden soll,
wobei der Virtualisierer (160) konfiguriert ist, um den physischen Pfad (150) auf Grundlage eines Dienstparameters und eines Elastizitätsparameters des physischen Pfades (150) auszuwählen,
wobei die Dienstparameter und die Elastizitätsparameter jeweils eine Bandbreite und eine zusätzliche Bandbreite sind und
wobei sich die Elastizität auf eine Fähigkeit bezieht, erforderliche Ressourcen dynamisch an einem Dienst in dem Netzwerk (120) mit mehreren Domänen bereitzustellen.

11. Virtualisierer (160) nach Anspruch 10, wobei der Virtualisierer (160) zum Auswählen des physischen Pfades (150) konfiguriert ist, der einen Mindestwert des Dienstparameters des physischen Pfades (150) aufweist, für den eine Kombination aus dem Dienstparameter und dem Elastizitätsparameter des physischen Pfades (150) einer Kombination aus dem angeforderten Dienstparameter und dem angeforderten Elastizitätsparameter entspricht.

**12.** Vorrichtung (600), die konfiguriert ist, um eine Elastizitätsunterstützung in einer Domäne eines Netzwerks (120) mit mehreren Domänen bereitzustellen, wobei die Vorrichtung (600) einen Orchestrator (110), einen Virtualisierer (160) und ein Pfadberechnungselement (200) umfasst, wobei die Vorrichtung (600) ferner Folgendes umfasst:

eine Schnittstelle (604), die konfiguriert ist, um Informationen für eine angeforderte Verknüpfung zu empfangen, die einen Teil eines End-to-End-Pfades über das Netzwerk (120) mit mehreren Domänen hinweg bildet, wobei die Informationen der angeforderten virtuellen Verknüpfung einen angeforderten Dienstparameter und einen angeforderten Elastizitätsparameter umfassen; und
wobei der Virtualisierer (160) konfiguriert ist, um einen physischen Pfad (150) auszuwählen, der mit der angeforderten virtuellen Verknüpfung übereinstimmt und auf dem Verkehr gesendet werden soll, wobei der physische Pfad (150) auf Grundlage eines Dienstparameters und eines Elastizitätsparameters des physischen Pfades (150) ausgewählt ist,
wobei die Dienstparameter und die Elastizitätsparameter jeweils eine Bandbreite und eine zusätzliche Bandbreite sind und
wobei sich die Elastizität auf eine Fähigkeit bezieht, erforderliche Ressourcen dynamisch an einem Dienst in dem Netzwerk (120) mit mehreren Domänen bereitzustellen.

**13.** Vorrichtung (600) nach Anspruch 12, die ferner konfiguriert ist, um Informationen des Dienstparameters und des Elastizitätsparameters von physischen Pfaden in Netzwerkdomänen des Netzwerks (120) mit mehreren Domänen von den Netzwerkdomänen des Netzwerks (120) mit mehreren Domänen zu empfangen und die physischen Pfade in den Netzwerkdomänen in virtuelle Verknüpfungen zusammenzufassen, sodass jede virtuelle Verknüpfung einen zugeordneten Dienstparameter und einen zugeordneten Elastizitätsparameter aufweist, wobei die Vorrichtung (600) ferner konfiguriert ist, um die von den Netzwerkdomänen empfangenen Informationen an das Pfadberechnungselement (200) zur Berechnung eines End-to-End-Pfades über das Netzwerk (120) mit mehreren Domänen hinweg zu übertragen.

**14.** Computerprogrammprodukt, das konfiguriert ist, um ein Verfahren (400) gemäß all den Schritten nach einem der Ansprüche 1 bis 9 durchzuführen, wenn es auf einem Computer ausgeführt wird.

## Revendications

**1.** Procédé (400) de fourniture de prise en charge d'élasticité au sein d'un domaine d'un réseau multidomaine (120), le procédé (400) comprenant :

la réception (401) d'informations pour une liaison virtuelle demandée faisant partie d'un chemin de bout en bout à travers le réseau multidomaine (120), dans lequel les informations de la liaison virtuelle demandée comprennent un paramètre de service demandé et un paramètre d'élasticité demandé ; et
la sélection (402) d'un chemin physique (150) correspondant à la liaison virtuelle demandée sur laquelle envoyer du trafic,
dans lequel le chemin physique (150) est sélectionné d'après un paramètre de service et un paramètre d'élasticité du chemin physique (150),
dans lequel les paramètres de service et les paramètres d'élasticité sont une largeur de bande et une largeur de bande supplémentaire respectivement, et
dans lequel l'élasticité concerne une capacité à fournir dynamiquement des ressources requises à un service dans le réseau multidomaine (120).

**2.** Procédé (400) selon la revendication 1, dans lequel le chemin physique (150) sélectionné est un chemin ayant une valeur minimale du paramètre de service du chemin physique (150) pour lequel une combinaison du paramètre de service et du paramètre d'élasticité du chemin physique (150) satisfait une combinaison du paramètre de service demandé et du paramètre d'élasticité demandé.

**3.** Procédé (400) selon l'une quelconque des revendications précédentes, dans lequel le chemin physique (150) sélectionné est un chemin ayant une largeur de bande minimale pour laquelle une somme de largeurs de bande du paramètre de service et du paramètre d'élasticité du chemin physique (150) satisfait une somme de largeurs de bande demandées du paramètre de service demandé et du paramètre d'élasticité demandé.

4. Procédé (400) selon l'une quelconque des revendications précédentes, dans lequel le paramètre de service demandé et le paramètre d'élasticité demandé sont des paramètres d'une liaison virtuelle acceptée comme faisant partie d'un chemin de bout en bout.

5. Procédé (400) selon l'une quelconque des revendications précédentes, dans lequel le paramètre d'élasticité demandé est un premier paramètre d'élasticité indiquant une élasticité qui ne requiert pas de déplacer le trafic vers un autre chemin et/ou le paramètre d'élasticité demandé est un second paramètre d'élasticité indiquant une élasticité totale.

6. Procédé (400) selon l'une quelconque des revendications précédentes, comprenant en outre le fait de déterminer (301) si une demande d'une liaison virtuelle comprenant le paramètre de service demandé satisfait un paramètre de service de la liaison virtuelle dans un domaine (120a), ou le fait de déterminer (303) si la demande de la liaison virtuelle comprenant le paramètre de service demandé satisfait une combinaison du paramètre de service et d'un paramètre d'élasticité de la liaison virtuelle dans le domaine (120a).

7. Procédé (400) selon l'une quelconque des revendications précédentes, comprenant en outre la détermination d'une acceptation (300) d'une demande d'une liaison virtuelle sans déterminer si une élasticité demandée définie par le paramètre d'élasticité demandé est satisfaite par la liaison virtuelle.

8. Procédé (400) selon l'une quelconque des revendications précédentes, comprenant en outre :

la réception (502) en provenance de domaines de réseau du réseau multidomaine (120), d'informations du paramètre de service et du paramètre d'élasticité de chemins physiques dans lesdits domaines de réseau ; la synthèse (504) des chemins physiques dans lesdits domaines de réseau en liaisons virtuelles, de sorte que chaque liaison virtuelle ait un paramètre de service associé et un paramètre d'élasticité associé ; et la transmission (508) des informations reçues en provenance desdits domaines de réseau à un élément de calcul de chemin (200) pour calculer un chemin de bout en bout à travers le réseau multidomaine (120).

9. Procédé (400) selon l'une quelconque des revendications précédentes, dans lequel le paramètre de service du chemin physique (150) sélectionné satisfait le paramètre de service demandé.

10. Virtualiseur (160) de fourniture de prise en charge d'élasticité au sein d'un domaine d'un réseau multidomaine (120), le virtualiseur (160) étant conçu pour :

recevoir des informations pour une liaison virtuelle demandée faisant partie d'un chemin de bout en bout à travers le réseau multidomaine (120), dans lequel les informations de la liaison virtuelle demandée comprennent un paramètre de service demandé et un paramètre d'élasticité demandé ; et sélectionner un chemin physique (150) correspondant à la liaison virtuelle demandée sur laquelle envoyer du trafic, dans lequel le virtualiseur (160) est conçu pour sélectionner le chemin physique (150) d'après un paramètre de service et un paramètre d'élasticité du chemin physique (150), dans lequel les paramètres de service et les paramètres d'élasticité sont une largeur de bande et une largeur de bande supplémentaire respectivement, et dans lequel l'élasticité concerne une capacité à fournir dynamiquement des ressources requises à un service dans le réseau multidomaine (120).

11. Virtualiseur (160) selon la revendication 10, dans lequel le virtualiseur (160) est conçu pour sélectionner le chemin physique (150) ayant une valeur minimale du paramètre de service du chemin physique (150) pour lequel une combinaison du paramètre de service et du paramètre d'élasticité du chemin physique (150) satisfait une combinaison du paramètre de service demandé et du paramètre d'élasticité demandé.

12. Appareil (600) conçu pour fournir une prise en charge d'élasticité au sein d'un domaine d'un réseau multidomaine (120), l'appareil (600) comprenant un orchestrateur (110), un virtualiseur (160), et un élément de calcul de chemin (200), l'appareil (600) comprenant en outre :

une interface (604) conçue pour recevoir des informations pour une liaison virtuelle demandée faisant partie d'un chemin de bout en bout à travers le réseau multidomaine (120), dans lequel les informations de la liaison virtuelle demandée comprennent un paramètre de service demandé et un paramètre d'élasticité demandé ; et le virtualiseur (160) conçu pour sélectionner un chemin physique (150) correspondant à la liaison virtuelle demandée sur laquelle envoyer du trafic, dans lequel le chemin physique (150) est sélectionné d'après un paramètre de service et un paramètre d'élasticité du chemin physique (150),

dans lequel les paramètres de service et les paramètres d'élasticité sont une largeur de bande et une largeur de bande supplémentaire, et

dans lequel l'élasticité concerne une capacité à fournir dynamiquement des ressources requises à un service dans le réseau multidomaine (120).

13. Appareil (600) selon la revendication 12, conçu en outre pour recevoir en provenance de domaines de réseau du réseau multidomaine (120), des informations du paramètre de service et du paramètre d'élasticité de chemins physiques dans lesdits domaines de réseau du réseau multidomaine (120), et synthétiser les chemins physiques dans lesdits domaines de réseau en liaisons virtuelles, de sorte que chaque liaison virtuelle ait un paramètre de service associé et un paramètre d'élasticité associé,

dans lequel l'appareil (600) est en outre conçu pour transmettre les informations reçues en provenance desdits domaines de réseau à l'élément de calcul de chemin (200) pour calculer un chemin de bout en bout à travers le réseau multidomaine (120).

14. Produit programme d'ordinateur conçu, lorsqu'il est exécuté sur un ordinateur, pour réaliser un procédé (400) selon toutes les étapes de l'une quelconque des revendications 1 à 9.

**FIG. 1**

**FIG. 2a**

| Paths AB | Description | |
|----------|-------------|-----|
| Path 1 | B1 | E1 |
| Path 2 | B2 | E2 |
| Path 3 | B3 | E3 |

**FIG. 2b**

FIG. 3

400

Receiving information
identifying a virtual link for
which a request is accepted ⌐401

Selecting physical path
corresponding to the virtual
link using service parameter
and elasticity parameter ⌐402

## FIG. 4

500

Information about service
parameters received ⌐502

Summarise physical paths
into virtual links ⌐504

Producing virtual network
topology ⌐506

Transferring virtual network
topology for computing of
E2E virtual path ⌐508

Identifying a virtual link
for a domain ⌐510

Selecting physical path ⌐512

## FIG. 5

*600*

| Memory | ~612 |

*610* ~ Processor

Orchestrator ~*110*

*160* ~ Virtualizer

PCE ~ *200*

*602* ~ IF

IF ~ *604*

*120a* ~ Domain

Virtual resources manager ~ *120b*

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009118050 A